# EUROPÄISCHE PATENTSCHRIFT

(11) **EP 1 206 990 B1**
(45) Veröffentlichungstag und Bekanntmachung des Hinweises auf die Patenterteilung: **12.09.2007**
(21) Anmeldenummer: 01125938.9
(22) Anmeldetag: 31.10.2001
(51) Int. Cl.: B23B 31/20

(54) **Axial-Spannfutter**
Collet chuck
Pince de serrage

(30) Priorität: 15.11.2000 DE 10056729
(43) Veröffentlichungstag der Anmeldung: 22.05.2002
(73) Patentinhaber: Josef Albrecht Bohrfutterfabrik GmbH + Co, 73249 Wernau (DE)
(72) Erfinder: Selb, Manfred, 73230 Kirchheim / Teck (DE)
(74) Vertreter: Rüger, Barthelt & Abel Patentanwälte

(56) Entgegenhaltungen:
- EP-A- 0 304 558
- EP-A- 0 334 191
- CH-A- 345 220
- FR-A- 1 254 628
- US-A- 3 897 159
- US-A- 5 030 047
- US-A- 5 927 913
- PATENT ABSTRACTS OF JAPAN vol. 011, no. 278 (M-623), 9. September 1987 (1987-09-09) & JP 62 079932 A (TOYODA MACH WORKS LTD), 13. April 1987 (1987-04-13)

## Beschreibung

Die Erfindung betrifft ein Spannfutter zum Spannen von Schäften, insbesondere ein Spannfutter zum reibschlüssigen Spannen von Werkzeugschäften.

Zum Spannen von rotierenden Werkzeugen bzw. deren Schäften sind Axial-Spannfutter bekannt, die mit Spannzangen oder Spannhülsen zum Spannen eines zylindrischen Abschnitts (Schafts) eines Werkzeugs versehen sind. Zum Festziehen und Lösen der Spannhülsen ist jeweils der Zugang zu einer entsprechenden Betätigungseinrichtung erforderlich. Es wird angestrebt, die Spannhülse auch dann betätigen zu können, wenn das Spannfutter mit der Spindel einer Werkzeugmaschine verbunden ist, bzw. wenn das Spannfutter mit einem Werkzeug-Voreinstellgerät verbunden ist. Zudem soll die Betätigung von Hand ohne Montagevorrichtung möglich sein.

Darüber hinaus wird häufig ein hohes übertragbares Drehmoment gewünscht. Dieses erfordert wegen der reibschlüssigen Spannung der Werkzeugschäfte hohe radiale Druckkräfte, die von der Spannhülse aufgebracht werden müssen.

Häufig sind mit Spannhülse-Spannfuttern Werkzeuge mit unterschiedlichen Schaftdurchmessern zu spannen. Dazu ist es jedoch immer erforderlich, dass die Spannhülse einen entsprechenden, mit dem Schaftdurchmesser übereinstimmenden Innendurchmesser aufweist. Zwischenlagen zwischen dem Werkzeugschaft und der Spannhülse sind nicht praktikabel - sie verschlechtern die Rundlaufgenauigkeit. Es ist deshalb erforderlich oder zu wünschen, die Spannhülsen wechseln zu können.

Aus der DE 44 05 242 A1 ist ein Spannfutter bekannt, das einen einstückig ausgebildeten Grundkörper mit einem etwa zylindrischen vorderen Teil und einem kegelförmigen Schaftteil aufweist. Der Grundkörper ist im Wesentlichen rotationssymmetrisch ausgebildet und weist eine axial ausgerichtete Durchgangsbohrung auf, die in dem zylindrischen Grundkörperabschnitt einen kegelförmigen Spannflächenbereich aufweist. In diesem ist eine Spannhülse angeordnet, die einen sich in die Durchgangsbohrungen hinein erstreckenden, mit Außengewinde versehenen Fortsatz aufweist. Über einen seitlichen Stift ist die Spannhülse axial verschiebbar jedoch unverdrehbar in der Durchgangsbohrung gelagert. Die Spannung der Spannhülse erfolgt durch Zug an ihrem Fortsatz. Dazu dient eine Schraubhülse, die in der Durchgangsbohrung angeordnet und mit einem Innengewinde versehen ist. Diese steht mit dem das Außengewinde tragenden Fortsatz in Verbindung. Die Schraubhülse ist außerdem mit einem Außengewinde versehen, das eine andere Steigung aufweist als das Innengewinde und das mit einem Innenge windeabschnitt der Durchgangsbohrung in Eingriff steht. Durch die Steigungsdifferenz zwischen der Gewindepaarung, Schraubhülse/Spannzange und Schraubhülse/Grundkörper, wird durch Drehen der Schraubhülse eine Spannbewegung der Spannzange erzeugt.

Bei diesem Futter ist die Betätigung der Gewindehülse nur dann möglich, wenn die Spannvorrichtung von einer Werkzeugspindel getrennt ist, d.h. wenn die an dem kegelförmigen Grundkörperteil mündenten Durchgangsbohrung frei ist. Er muss außerdem zur Beteiligung in eine Montagevorrichtung integriert werden, um die koaxialen Drehmomente aufbringen zu können.

Aus der EP 0 304 558 ist ein Spannfutter mit einer Spannhülse bekannt, die über einen Schneckentrieb betätigt wird. Die Spannhülse dient der Halterung eines Werkzeughalters und weist dazu an ihrem hinteren Ende einen Fortsatz auf, der mit Außengewinde versehen ist. Auf dem Fortsatz sitzt eine Hülse mit radialem Spiel. Die Hülse ist endseitig mit einem Ringflansch versehen und stützt sich an einem Gewindering ab, der auf den Fortsatz aufgeschraubt ist. Der Gewindering und die Hülse sind über eine Nut-Feder-Verbindung in dem Grundkörper drehfest gelagert. An der Außenseite ist die Hülse mit einem Spanngewinde versehen, auf dem ein Gewindering sitzt. Dieser ist in dem Grundkörper axial unverschiebbar und drehbar gelagert. An seiner Außenseite trägt er eine Verzahnung, die mit einer Schnecke in Verbindung steht.

Zur Erhöhung von übertragbaren Drehmomenten ist der Grundkörper an seiner dem Werkzeug zugewandten Stirnseite mit Vorsprüngen (Nutensteinen) versehen, die in entsprechende Ausnehmungen eines scheibenförmigen Flanschs greifen, der mit dem Werkzeug verbunden ist.

Ein solches Spannfutter benötigt eine spezielle Herrichtung der Werkzeuge in Form eines formschlüssigen zu kuppelnden Flanschs. Außerdem ist ein Spannhülsenwechsel nicht vorgesehen.

Die Zentrierung des Werkzeughalters erfolgt durch die Spannhülse in ihrem relativ steilen Kegelsitz. Um Radialkräfte von der Spannhülse fernzuhalten, ist diese mit einer Entkopplungshülse verbunden, die ihrerseits mit einem Spanngetriebe in Verbindung steht.

Aus der Praxis ist außerdem ein Spannfutter bekannt, das Spannhülsen mit steilem Kegel durch ein Schraubgetriebe in eine Spannöffnung hineinzieht. Zur Zentrierung der Spannhülse weist diese einen Zylinderabschnitt auf, der in einem zylindrischen Bohrungsabschnitt des Futters geführt ist. Das Schraubgetriebe greift hinter dem zylindrischen Abschnitt an der Spannhülse an und weist ein Winkelgetriebe (Kegelradgetriebe) zur Betätigung auf.

Davon ausgehend ist es Aufgabe der Erfindung, ein Spannfutter zu schaffen, das herkömmliche zylindrische Schäfte spannen und bei hoher Spanngenauigkeit hohe Drehmomente übertragen kann.

Diese Aufgabe wird mit dem Spannfutter nach Anspruch 1 gelöst :

Das erfindungsgemäße Spannfutter weist ein Spannelement, beispielsweise in Form einer Spannhülse oder Spannzange auf, das zur Aufnahme eines Schafts eingerichtet oder an einem solchen ausgebildet ist und eine konische Außenseite aufweist. Die konische Außenseite ist mit einer konischen Innenseite einer zentralen Öffnung des Gehäusekörpers in Eingriff. Bei Axialbewegung der Spannhülse entsteht somit zwischen den Konusflächen eine Keilwirkung, durch die die Spannhülse radial zusammengedrückt wird. Dazu weist die Spannhülse mehrere, z.B. drei oder 4 Längsschlitze auf.

Bei dem erfindungsgemäßen Spannfutter werden Spannhülsen oder Werkzeugschäfte mit sehr schlankem Keilwinkel (von kleiner 3,5°) gespannt. Solche schlanken Keilwinkel gestatten insbesondere in Verbindung mit hochuntersetzenden Spanngetrieben wie Schneckengetrieben oder auch Kegelradgetrieben hohe Spannkräfte - fordern jedoch in der Regel eine zusätzliche Zentrierung. Das erfindungsgemäße Spannfutter kommt ohne zusätzliche Zentrierung aus; die Zentrierung des schlanken Kegels wird allein von der Zentrieröffnung mit ihrer entsprechenden kegelförmigen Innenfläche (Wandung) bewirkt. Es hat sich gezeigt, dass schlanke Zentrieröffnungen, die eine Selbsthemmung des Spannelements bewirken, trotz auf die Spannhülse oder den Spannschaft einwirkender Kippmomente, die bspw. von dem Winkelgetriebe herrühren können, ohne zusätzliche Maßnahmen wie Zylinderführungen oder dergleichen eine sehr gute Zentrierung und somit einen guten Rundlauf erzeugen können. Dies überraschenderweise, obwohl sich das Spannelement durch die Selbsthemmung, wenn es einmal schräg sitzt, nicht mehr selbst "gerade rücken" kann.

Darüber hinaus bieten Winkelgetriebe zur Betätigung der Spannvorrichtung gegenüber koaxialen Spanneinrichtungen wie bspw. Differentialgewindeanordnungen den Vorteil, ohne Zusatzvorrichtungen die erforderlichen Spannmomente in das Spannfutter einbringen zu können. Dieser Vorteil wird insbesondere beim Lösen des Spannfutters sichtbar, bei dem zum Abdrücken des schlanken Kegel hohe Betätigungsmomente erforderlich sind.

Das Spannelement (die Spannhülse) weist z.B. einen mit Außengewinde versehenen Fortsatz auf, dessen Außendurchmesser kleiner ist als der Außendurchmesser der konischen Spannhülse an ihrem dem Fortsatz benachbarten Ende. Dadurch kann die Spannhülse im ungespannten Zustand aus dem Spannfutter herausgeschraubt werden und zwar von Hand und ohne Einsatz von besonderen Werkzeugen. Die Spannhülse ist in dem Gehäusekörper nicht drehfest gelagert, sondern sie sitzt lediglich reibschlüssig mit ihrer Außenseite in der Öffnung. Sie ist somit, wenn sie nicht festgespannt ist, frei drehbar. Dadurch kann das Spannfutter mit einfachsten Maßnahmen einfach durch Austauschen des Spannelements an unterschiedliche Schaftdurchmesser und bedarfsweise auch an unterschiedliche Schaftformen angepasst werden.

Die Spannhülse weist einen Keilwinkel von weniger als 3,5° auf, d.h. die Mantelfläche ist gegen die Drehachse um weniger als 3,5° geneigt. dadurch werden extrem hohe Spannkräfte erzeugt, was zu hohen übertragbaren Drehmomenten führt. Die dazu erforderlichen hohen Zugkräfte werden durch unmittelbaren Angriff des Drehkörpers an der Spannhülse erreicht. Vorzugsweise beträgt der Keilwinkel weniger als 2°, im Ausführungsbeispiel beträgt er 1,25°.

Der Spannhülse ist ein Spanngetriebe zugeordnet, zu dem ein in dem Gehäusekörper axial unverschiebbar und drehbar gelagerter Drehkörper gehört. Im Rahmen der axialen Lagerung kann der Drehkörper bei Bedarf ein gewisses geringes Axialspiel aufweisen. Er findet jedoch in beiden Axialrichtungen eine definierte feste Anlage über entsprechende Lagereinrichtungen an dem Gehäusekörper. Die Drehung des Drehkörpers bewirkt ein Hineinziehen der durch Reibschluss unverdrehbar in der Öffnung sitzenden Spannhülse in die Öffnung und somit ein Spannen oder ein Herausschieben der Spannhülse - bei gegensinniger Drehung. Das Spannen und Lösen, d.h. die Axialbewegung der Spannhülse wird durch eine Schraubbewegung des Innengewindes des Drehkörpers in Bezug auf das Spanngewinde der Spannhülse erreicht. Weil dessen Durchmesser geringer ist als der Außendurchmesser der Spannhülse, ist zur Überwindung der Gewindereibung lediglich ein niedriges Reibmoment erforderlich, so dass zum Antrieb des Drehkörpers beim Spannen (und Lösen) des Futters nur geringe Drehmomente erforderlich sind. Umgekehrt können mit großen Antriebsdrehmomenten sehr große Zugkräfte und somit sehr große Spannkräfte an der Spannhülse erreicht werden.

Der Drehkörper wird über ein Winkelgetriebe betätigt, wie beispielsweise eine Schnecke, die mit einer Außenverzahnung des Drehkörpers in Eingriff steht. Dies hat den unmittelbaren Vorteil des guten Zugangs zu der Antriebseinrichtung. Die Drehachse der Schnecke kreuzt die Drehachse des Futters und läuft seitlich an dieser vorbei. Die Schnecke kann deshalb durch ein seitlich an dem Spannfutter anzusetzendes Werkzeug betätigt werden. Die Betätigung kann erfolgen, während das Spannfutter mit einer Arbeitsspindel oder einer Spindelhalterung verbunden ist. Ein Zugang durch den Schaft des Spannfutters hindurch ist nicht erforderlich.

Ist das Spannfutter von der Arbeitsspindel gelöst, kann das Futter von Hand gehalten und das Betätigungsmoment von z.B. 14 Nm durch ein Handwerkzeug aufgebracht werden. Es ist nicht erforderlich, das Futter in einer Aufnahme zu lagern.

Die zwischen dem Drehkörper und der Spannhülse ausgebildete Spanngewindeverbindung bewirkt bei Drehung des Drehkörpers eine Axialbewegung der Spannhülse zum Spannen und Freigeben eines Schafts. Bei Drehung der Spannhülse bewirkt die Spanngewindeverbindung eine Axialbewegung der Spannhülse, um diese aus der Öffnung des Gehäusekörpers herauszuführen, d.h. zum Spannhülsenwechsel. Eine Anpassung an unterschiedliche Schäfte ist deshalb insbesondere wegen der nicht drehfesten Lagerung der Spannhülse in der Öffnung auf einfache Weise möglich. Das Spannelement (die Spannhülse) ist aus dem Drehkörper herausschraubbar. Dies insbesondere wenn durch entsprechende Drehung des Drehkörpers der feste Sitz der Spannhülse in der Öffnung etwas gelöst ist.

Das Spanngewinde weist ein Radialspiel auf, das größer ist als jede seitliche Bewegung des Drehkörpers. Dadurch sind die Spannhülse und der Drehkörper in Radialrichtung kräftemäßig entkoppelt. Somit sind auch die Spannhülse und das Winkelgetriebe in Radialrichtung kräftemäßig entkoppelt. Die Zentrierung der Spannhülse wird dadurch allein durch den konischen Sitz in der Zentrieröffnung bewirkt. Das Spannfutter liefert damit nicht nur ein hohes übertragbares Drehmoment sondern auch eine sehr gute Zentrierung und Genauigkeit.

Die Drehmomentübertragung von dem Gehäusegrundkörper auf die Spannhülse erfolgt allein durch Reibschluss zwischen der Spannhülse (dem Spannelement) und dem Gehäusekörper. Formschlüssige Mittel zur drehfesten Sicherung der Spannhülse in der Öffnung sind nicht vorgesehen. Ebenso sind keinerlei formschlüssige Mittel zwischen dem Werkzeug und dem Gehäusegrundkörper vorgesehen, so dass die Drehmomentübertragung insgesamt vollständig reibschlüssig erfolgt.

Die Betätigung des Drehkörpers d.h. dessen Drehung, kann wie erläutert durch ein Schneckengetriebe bewirkt werden, indem eine Schnecke mit einer Außenverzahnung des Drehkörpers kämmt. Alternativ kann der Drehkörper mit einer Verzahnung versehen sein, die mit einem Kegelrad kämmt, das als Drehantrieb für den Drehkörper dient. Die Schnecke oder das Kegelrad können mit einer Kupplungseinrichtung versehen sein, die mit einem speziellen Werkzeug, beispielsweise einem Vierkant, in Eingriff bringbar ist, um die Schnecke oder das Kegelrad gezielt zu verdrehen.

Der Drehkörper ist in beiden Axialrichtungen durch Drucklager geführt. Die Drucklager sind als Wälzlager ausgebildet. Dies reduziert das zum Drehen des Drehkörpers unter Last erforderliche Antriebsmoment und erhöht somit bei gegebenem Antriebsmoment die erreichbare Zugkraft. Dadurch wird wiederum die radiale Spannkraft des Spannelements erhöht, was ein hohes übertragbares Drehmoment ermöglicht. Es wird darüber hinaus möglich, das zum Lösen erforderliche Betätigungsmoment an das zum Spannen erforderliche Drehmoment anzugleichen. Beim Lösen muss die Haftreibung des Spanngetriebes und die Haftreibung der Spannhülse überwunden werden (Losbrechmoment). Dies ist insbesondere bei einem geringen Keilwinkel der Spannhülse von weniger als 3, 5° hoch. Durch die Wälzlagerung des Drehkörpers kann es in Grenzen gehalten werden.

Das Anzugmoment kann durch entsprechende Auslegung der Betätigungswerkzeuge auf Maximalwerte von z.B. 14 Nm begrenzt werden. Die erfindungsgemäße Lösung gestattet es, mit diesem Maximalwert das Spannfutter auch wieder zu lösen.

Eine weitere Besonderheit einer vorteilhaften Ausführungsform des erfindungsgemäßen Spannfutters liegt in einem Drehspiel des Drehkörpers zwischen seiner Spannposition und seiner Löseposition. Ist die Spannhülse in Spannposition, stützt sich die Spannhülse über den Drehkörper und sein erstes axiales Drucklager an dem Gehäusekörper ab. Wird die Zughülse nun unter Überwindung der vorhandenen Reibkräfte in Löserichtung gedreht, wird die Spannhülse entspannt, bleibt jedoch im Presssitz in der kegelförmigen Öffnung unverrückbar am Platz. Nach Durchlaufen des Drehspiels stützt sich der Drehkörper über das andere Drucklager an dem Gehäusekörper ab und beginnt die Spannhülse abzudrücken. Durch das Drehspiel des Drehkörpers, das sich durch das Gewindespiel der Spanngewindeverbindung und gegebenenfalls durch ein zusätzliches Axialspiel des Drehkörpers ergibt, wird die Betätigung erleichtert und es werden höhere Spannkräfte ermöglicht. Dies rührt daher, dass beim Lösen der Spannhülse ein erstes Drehmomentmaximum auftritt, das erforderlicht ist, um die Verspannung des Drehkörpers zu lösen. Nach Durchlaufen eines Drehspiels ergibt sich ein zweites Drehemomentmaximum des Betätigungsdrehmoments, das erforderlich ist, um die Spannhülse aus dem festen Sitz in ihrer Öffnung zu lösen. Nachdem beide Drehmomentemaxima nicht zusammenfallen, kann mit der Betätigungseinrichtung auch eine sehr festsitzende Spannhülse abgedrückt werden weil nicht zugleich die Haftreibung zum Lösen des Drehkörpers und zum Lösen der Spannhülse überwunden werden müssen.

Das Lösen der Spannhülse wird durch eine reibungsmindernde Beschichtung der Spannhülse und/oder der Wandung der Öffnung noch verbessert. Die Beschichtung ist vorzugsweise eine schlagzähe Hartstoffbeschichtung, die bei niedrigen Temperaturen aufgebracht wird. Hier werden Temperaturen von unter 200 °C bevorzugt. Dadurch wird es möglich, Spannhülsen aus Federstahl einzusetzen, ohne die Federhärte des Federstahls zu beeinträchtigen.

Der Drehkörper ist vorzugsweise mit einer Zentralöffnung versehen, in die die Spannhülse ragt. Dies ergibt eine kompakte Bauform. Radiallager, die vorzugsweise zu beiden Seiten des Winkelgetriebes angeordnet sind, verhindern ein seitliches Dejustieren der Spannhülse. Mit anderen Worten, die Radiallager halten von dem Winkelgetriebe ausgehende Radialkräfte von der Spannhülse fern, so dass diese ohne Zusatzmaßnahmen durch den Sitz in der kegelförmigen Öffnung zentriert bleibt.

Vorteilhafterweise sind an dem Spannfutter ein oder zwei Dichtungseinrichtungen vorgesehen, die den Drehkörper beispielsweise an seinen beiden Stirnseiten abdichten. Dadurch werden die Lager des Drehkörpers und dessen Betätigungseinrichtung vor Verschmutzung geschützt.

Bedarfsweise kann das Spannelement (die Spannhülse) mit einem Anschlagbolzen versehen sein, der beispielsweise axial verstellbar gelagert ist. Zur Verstellung kann ein Gewinde dienen. Vorzugsweise ist der Spannbolzen von beiden Axialrichtungen zugänglich. So ist es möglich, den Spannbolzen zu verstellen, wenn ein Werkzeug in der Spannhülse sitzt. Außerdem ist es möglich, den Anschlagbolzen zu verstellen, wenn das Spannfutter an einer Werkzeugspindel sitzt aber kein Werkzeug trägt.

Bei einer vorteilhaften Ausführungsform ist die Spannhülse mit einer Ringschulter versehen, der eine ringförmige Stufe in dem Drehkörper zugeordnet ist. Die Ringschulter und die Ringstufe bilden eine Anschlageinrichtung, die verhindert, dass die Spannhülse zu weit in die Öffnung hereingezogen wird, beispielsweise wenn kein Werkzeug in das Spannfutter eingesetzt ist und der Drehkörper gedreht wird. Durch die Anschlageinrichtung können Beschädigungen der Spannhülse vermieden werden.

Bei einer vorteilhaften Ausführungsform ist das Grundgehäuse zweiteilig ausgebildet. Es weist einen ersten Gehäuseteil auf, der den Drehkörper, das Winkelgetriebe und die Lagereinrichtungen für den Drehkörper beherbergt. Ein zweiter Gehäuseteil ist auf diesen Gehäuseteil aufgesetzt, wodurch der Drehkörper axial gesichert und die Aufnahmekammer des Drehkörpers axial geschlossen wird. Der zweite Gehäuseteil enthält den Kegelsitz für die Spannhülse und ist mit dem ersten Gehäuseteil verschraubt und verklebt. Dies stellt die dauerhaft präzise Ausrichtung des zweiten Gehäuseteils zu dem ersten Gehäuseteil sicher. Andere Verbindungstechnologien sind anwendbar, z.B. kann der zweite Gehäuseteil aus den ersten Gehäuseteil aufgeschrumpft werden.

Weiter vorteilhafte Einzelheiten ergeben sich aus Unteransprüchen, der Zeichnung oder der Beschreibung. In der Zeichnung sind Ausführungsbeispiele der Erfindung veranschaulicht. Es zeigen:
Fig. 1 ein Spannfutter in längs geschnittener Darstellung,
Fig. 2 das Spannfutter nach Figur 1, in einer Stirnansicht, teilweise aufgeschnitten,
Fig. 3 eine Spannhülse für ein Spannfutter nach Figur 1, in Seitenansicht,
Fig. 4 die Spannhülse nach Figur 3, in einer Stirnansicht,
Fig. 5 eine abgewandelte Ausführungsform der Spanneinrichtung in längs geschnittener Darstellung,
Figuren 6 und 7 Spannhülsen beziehungsweise Spannzangen für das Spannfutter nach Figur 5,
Figur 8 eine alternative Ausführungsform eines Spannfutters in längs geschnittener Darstellung und
Figur 9 eine weitere Ausführungsform eines Spannfutters in längs geschnittener Darstellung.

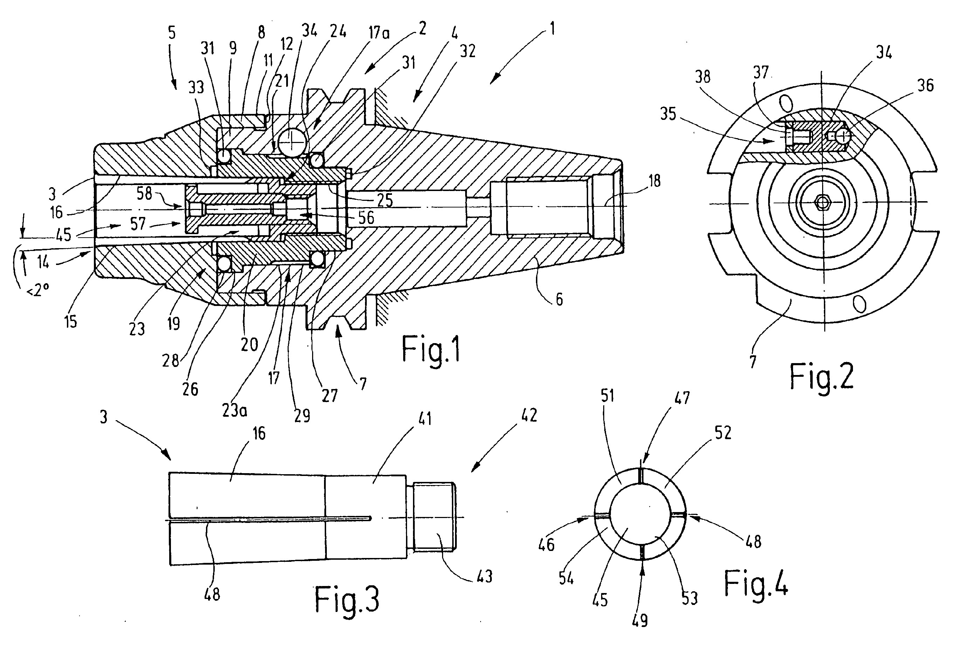

In Figur 1 ist ein Spannfutter 1 veranschaulicht, das einen Gehäusekörper 2 und eine darin gelagerte Spannhülse 3 aufweist. Der Gehäusekörper 2 weist einen ersten Gehäuseteil 4 und einen zweiten Gehäuseteil 5 auf. Der Gehäuseteil 4 ist im Wesentlichen rotationssymmetrisch ausgebildet und mit einem Kegelschaft 6 versehen, der dazu dient, den Gehäusekörper 2 an einer Maschinenspindel zu befestigen. Außerdem kann der Gehäusekörper 2 mit einem an sich bekannten Greifflansch 7 für den automatischen Werkzeugwechsel oder zur anderweitigen Handhabung des Spannfutters 1 versehen sein.

Der zweite Gehäuseteil 5 ist mit dem Gehäuseteil 4 verschraubt. Er weist dazu einen nach Art einer Überwurfmutter ausgebildeten Abschnitt 8 auf, der auf einem mit Gewinde versehenen Fortsatz 9 des ersten Gehäuseteils 4 aufgeschraubt ist. Zur Ausrichtung der beiden Gehäuseteile 4, 5 gegeneinander dient die flächige Anlage des zweiten Gehäuseteils 5 mit seiner Stirnfläche 11 an einer Ringschulter 12 des ersten Gehäuseteils 4. Die Gewindeverbindung ist durch Klebstoff gesichert und somit nicht lösbar. Die Genauigkeit der Zentrieröffnung 14 wird vorzugsweise nach dem Fügen hergestellt.

In dem zweiten Gehäuseteil 5 ist eine sich kegelförmig verjüngende Zentrieröffnung 14 ausgebildet, die eine im Wesentlichen kegelförmige Wandung 15 aufweist. Die Zentrieröffnung 14 dient zur Lagerung und Zentrierung der Spannhülse 3, die eine entsprechende, kegelförmige Außenseite 16 aufweist, die flächig an der Wandung 15 anliegt. Die Zentrieröffnung 14 führt in eine sich in den ersten Gehäuseteil 4 erstreckende Aufnahmekammer 17, die rotationssymmetrisch ausgebildet und im Wesentlichen koaxial zu der Zentrieröffnung 14 angeordnet ist. Die Zentrieröffnung 14 und die Aufnahmekammer 17 sind koaxial zu einer gemeinsamen Achse 18 angeordnet, die auch die Drehachse des Spannfutters 1 bildet. Die Aufnahmekammer 17 weist einen größeren Durchmesser auf als die Zentrieröffnung 14. Aus der Aufnahmekammer 17 führt eine Durchgangsöffnung durch den Kegelschaft 6.

In der Aufnahmekammer 17 sitzt ein Spanngetriebe 19, zu dem ein hülsenförmiger Drehkörper 20 gehört, der dazu dient, die Spannhülse 3 axial in die Zentrieröffnung 14 hineinzuziehen oder aus dieser herauszudrücken. Der Drehkörper 20 ist dazu drehbar, axial im Wesentlichen jedoch unverschieblich in der Aufnahmekammer 17 gelagert.

Der Drehkörper 20 weist eine Zentralöffnung 23 auf, die im Wesentlichen zylindrisch ausgebildet ist und glatt an die Wandung 15 anschließt. Etwa in der Mitte des Drehkörpers 20 verengt sich die Zentralöffnung 23 bei einer Ringschulter 24. Von der Ringschulter 24 ausgehend ist der engere Teil der Zentralöffnung 23 mit Innengewinde 25 versehen.

Zur drehbaren Lagerung des Drehkörpers 20 in der Aufnahmekammer 17 (Radiallagerung) ist der Drehkörper 20 mit zylindrischen Außenflächen 26, 27 versehen, die an entsprechenden zylindrischen Innenflächen der Aufnahmekammer 17 geführt sind. Diese bilden Radiallager. Zur axialen Lagerung dienen axiale Druckflächen 28, 29, die über Wälzkörper, wie beispielsweise Kugeln 31, an entsprechenden axial orientierten Flächen der Aufnahmekammer abgestützt sind. Diese bilden Axiallager 31a, 31b.

Zur Abdichtung der Zentralöffnung 23 und der Zentrieröffnung 14 gegen die übrige Aufnahmekammer 17, ist in dem Gehäuseteil 4 eine die Durchgangsöffnung umgebende, der Aufnahmekammer 17 zugewandte Ringnut 32 vorgesehen, in der ein Dichtungsmittel wie beispielsweise ein O-Ring sitzt. Entsprechend ist in dem zweiten Gehäuseteil 5 eine die Zentrieröffnung 14 umgebende, der Aufnahmekammer 17 zugewandte Ringnut 33 vorgesehen, die ebenfalls der Aufnahme eines Dichtungsmittels wie beispielsweise eines O-Rings dient. Beide O-Ringe finden Anlage an der entsprechenden Stirnfläche des Drehkörpers 20 und dichten somit insbesondere die durch die Kugeln 31 gebildeten Wälzlager 31a, 31b ab.

Zur Betätigung, d.h. Drehung des Drehkörpers 20, dient ein Winkelgetriebe. Zu diesem gehört eine Schnecke 34 deren Drehachse quer zu der Achse 18 orientiert ist und die mit Zähnen 21 in Eingriff steht, die an der Außenseite des Drehkörpers 20 vorgesehen sind. Der Drehkörper 20 und das Winkelgetriebe bilden ein Spanngetriebe. Wie insbesondere aus Figur 2 ersichtlich ist, ist die Schnecke 34 drehbar, dabei jedoch axial unverschiebbar in einer entsprechenden Querbohrung 35 aufgenommen. Die Steigung der Schnecke 34 ist dabei so gewählt, dass sich die Schnecke 34 beim Festziehen der Spannhülse 3 stirnseitig über eine Kugel 36 an dem Boden der Querbohrung 35 abstützt. In der Gegenrichtung ist die Schnecke 34 durch einen Sprengring 37 gesichert. Ein in der freien Stirnfläche der Schnecke 34 vorgesehenes Innenprofil 38, wie beispielsweise ein Sechskant oder dergleichen dient als Kupplungseinrichtung zum Ansetzen eines entsprechenden Werkzeugs.

Die Spannhülse 3 ist in den Figuren 3 und 4 gesondert dargestellt. Sie weist einen ersten konischen Abschnitt auf, an dem die kegelförmige Mandelfläche 16 ausgebildet ist. An diesen schließt sich ein zylindrischer Abschnitt 41 an, der in die Zentralöffnung 23 ragt, wenn die Spannhülse 3 in die Öffnung 14 eingesetzt ist. An diesen Abschnitt schließt sich dann ein Fortsatz 42 an, dessen Außendurchmesser geringer ist als der Außendurchmesser des Abschnitts 41. Der Fortsatz 42 ist mit einem Spanngewinde 43 versehen, das zu dem Innengewinde 25 des Drehkörpers 20 passt.

Die Spannhülse 3 ist, wie Figur 1 oder Figur 4 veranschaulichen, mit einer Schaftöffnung 45 zur Aufnahme des zylindrischen Spannschafts eines Werkzeugs versehen. Die Schaftöffnung 45 ist koaxial zu der Achse 18 ausgerichtet. Von der Außenumfangsfläche der Spannhülse 3 führen Radialschlitze 46, 47, 48, 49 zu der Schaftöffnung 45, so dass vier von einander getrennte Spannfinger 51, 52, 53, 54 freigestellt sind. Diese werden radial aufeinander zu bewegt, wenn die Spannhülse 3 in die Öffnung 3 hinein gezogen wird.

Die Spannhülse 3 ist zumindest an ihrer Außenseite 16 mit einer reibungsmindernden Beschichtung versehen Alternativ oder ergänzend kann die Wandung der Zentrieröffnung mit einer reibungsmindernden Beschichtung versehen sein. Als Beschichtung kommt Wolframcarbid mit Kohlenstoffüberschuss (WCC), eine diamantähnliche Kohlenstoffbeschichtung oder eine andere glatte, schlagzähe Hartstoffbeschichtung in Frage. Die Beschichtung erleichtert das Spannen und die Überwindung der Haftreibung zwischen der Spannhülse 3 und der Wandung der Zentrieröffnung 14 beim Lösen. Die reibungsmindernde Beschichtung gestattet trotz ihrer Reibungsminderung, die Drehmomentübertragung in Reibschluss, im gespannten Zustand. Bedarfsweise kann zusätzlich eine formschlüssige Verdrehsicherung vorgesehen sein, die zwischen der Spannhülse 3 und dem Grundkörper 2 wirkt.

Die Spannhülse 3 kann, wie Figur 1 veranschaulicht, mit einer Durchgangsöffnung 56 versehen sein, die Innengewinde aufweist und in der ein Justierbolzen 57 mit seinem Schaft sitzt. Außerdem weist der Justierbolzen 57 einen Kopf auf, der sich in der Schaftöffnung 45 befindet und einen Anschlag für einen in die Schaftöffnung 45 einzusetzenden Werkzeugschaft bildet. Der Justierbolzen 57 kann hohl gebohrt sein, um einen Durchgang für Kühlfluid zu schaffen. Außerdem kann er an beiden Enden mit einem Kupplungsmittel, wie beispielsweise einem Innensechskant 58 versehen sein, um seine gezielte Verdrehung mit einem Handwerkzeug zu ermöglichen.

Das insoweit beschriebene Spannfutter 1 arbeitet wie folgt:

Es wird zunächst davon ausgegangen, dass das Spannfutter 1 den in Figur 1 veranschaulichten Zustand aufweist, d.h. es ist eine Spannhülse 3 so in die Zentrieröffnung 14 eingesetzt, dass der Fortsatz 42 mit dem Innengewinde 25 der Zentralöffnung 23 im Eingriff steht. Die Außenfläche 16 der Spannhülse 3 liegt reibschlüssig an der Kegelfläche 15 an. Die Spannhülse ist jedoch noch nicht angezogen. In diesem Zustand kann ein zylindrischer Schaft eines Werkzeugs in die Schaftöffnung 45 eingesetzt werden.

Ist dies geschehen, kann das Spannfutter 1 derart betätigt werden, dass der Schaft des Werkzeugs in der Spannhülse 3 und somit in dem Spannfutter 1 festgespannt wird. Dazu wird die Schnecke 34 mittels einem geeigneten Werkzeugs, wie beispielsweise eines Schraubendrehers oder Schraubenschlüssels, so gedreht, dass mit entsprechender Untersetzung der Drehkörper 20 gedreht wird. Dieser wird dabei in einem solchen Drehsinn bewegt, dass das Innengewinde 25 den Fortsatz 42 in die Zentralöffnung 23 hineinzieht. Dadurch wird die Spannhülse 3 in die Zentrieröffnung 14 hineingezogen und der Werkzeugschaft festgespannt. Der Drehkörper 20 stützt sich dabei über die Kugeln 31 an dem zweiten Gehäuseteil 5 ab.

Durch die Keilwirkung der Spannhülse, d.h. den spitzen Winkel von 1° bis 2°, den ihre äußere Mantelfläche (Außenseite 16) mit der zylindrischen Innenfläche ihrer Schaftaufnahmeoffnung 45 einschließt, bewirkt der von dem Drehkorper 20 auf den Fortsatz 42 und somit auf die Spannhülse 3 ausgeubte Zug eine radiale Flächenpressung, die zum einen den zylindrischen Schaft des Werkzeugs in der Spannhülse 3 testspannt und die zum anderen die Spannhülse in der Öffnung 14 drehfest sichert.

Durch die an dem Innengewinde 25 auftretende Reibung und durch die Selbsthemmung der Schnecke 34 bleibt die Spannhülse 3 in Spannposition, so dass das gespannte Werkzeug in beiden Drehrichtungen sowohl rechtslaufend als auch linkslaufend betrieben werden kann. Dies ohne sonstige Verdrehsicherung der Spannhülse 3 und mit hohem Drehmoment. Das hohe Drehmoment wird insbesondere durch die Leichtgängigkeit des Drehkörpers 20 beim Spannen sichergestellt. Zur Leichtgängigkeit tragen die Lagerung des Drehkörpers 20 uber das durch die Kugeln 31 gebildete axiale Wälz-Drucklager 31a und der geringe Durchmesser des Fortsatzes 42 bei.

Soll das gespannte Werkzeug gelöst werden, ist die Spannhülse 3 aus der Öffnung 14 axial herauszubewegen. Zumindest ist ihr fester Sitz zu lösen. Dazu wird der Drehkörper 20 in Gegenrichtung gedreht. Zunächst ist dabei die Haftreibung zu überwinden, mit der der Drehkörper 20 in seiner Spannposition gehalten ist. Die Haftreibung entsteht in erster Linie an dem Außengewinde 43 des Fortsatzes 42. Dazu wird die Schnecke 34 in Gegenrichtung gedreht. Zunächst löst sich die Schnecke 34 und durchläuft das Zahnflankenspiel, das sich zwischen ihrem Schneckengang und der Außenverzahnung des Drehkörpers 20 einstellt, mit dem sie in Eingriff steht. Ist dieses Spiel durchlaufen löst die Schnecke 34 durch weitere Drehung zunächst den Drehkörper 20. Dieser ist nun im Rahmen seines eigenen Axialspiels und des Gewindespiels zwischen den Flanken des Innengewindes 25 und des Außengewindes 43 frei drehbar. Bei weiterer Drehung kommen die Flanken der Gewinde 25, 43 wieder in Eingriff und das hintere in Figur 1 rechtsseitige Drucklager 31b übernimmt die weitere Abstützung des Drehkörpers 20. Dieser schraubt nun bei weiterer Drehung den Fortsatz 42 aus der Zentralöffnung 23 heraus und drückt somit die Spannhülse 3 aus ihrem Presssitz heraus.

Durch die bewusste Einhaltung eines gewissen Spiels zwischen den Flanken der Gewinde 25, 43 und/oder einer gewissen axialen Beweglichkeit des Drehkörpers 20 kann erreicht werden, dass zwischen dem zum Lösen des festgespannten Drehkörpers 20 erforderlichen Maximaldrehmoment und dem zum Abdrücken der Spannhülse 3 erforderlichen Maximaldrehmoment ein Drehspiel vorhanden ist, so dass auch sehr fest sitzende Spannhülsen 3 mit relativ geringen Betätigungsmomenten wieder gelöst werden können. Insbesondere kann das Lösemoment auf einen Wert begrenzt werden, der nicht größer ist, als der zum Spannen erforderliche Wert. Umgekehrt erlaubt dies eine Auslegung des Spannfutters auf sehr hohe Spannkräfte, d.h. die Benutzung von Spannhülsen mit sehr schlanken Keilwinkel und hohe Spanngetriebeuntersetzungen. Der Keilwinkel zwischen der Außenfläche 16 und der Drehachse 18 kann kleiner als 2° sein und beträgt vorzugsweise 1,25°. Die Spannhülse 3 ist somit selbsthemmend in der Zentrieröffnung 14 gehalten.

Soll ein Werkzeug mit einem anderen Spannschaft, beispielsweise mit einem Spannschaft kleineren Durchmessers gespannt werden, ist die Spannhülse 3 auszuwechseln. Dazu kann diese in gelöstem Zustand ohne weiteres aus der Zentrieröffnung 14 herausgeschraubt werden. Sie ist in Lösestellung drehbar und nur mit ihrem Fortsatz 43 in dem Innengewinde 25 der Zentralöffnung 23 gehalten. Ist die Spannhülse 3 aus der Zentrieröffnung 14 herausgenommen, kann eine andere Spannhülse 3 in die Zentrieröffnung 14 eingesetzt und mit einigen Drehungen in die Zentralöffnung 23 eingeschraubt werden. Das Spannfutter 1 ist somit für das Spannen eines anderen Werkzeugs hergerichtet.

Die Spannhülse 3 kann auch auf dem Werkzeug verbleiben, d.h. wenn das Spannfutter 1 gelöst ist, kann das Werkzeug mit der Spannhülse 3 aus der Zentrieröffnung 14 herausgeschraubt werden.

Ist eine neue Spannhülse 3 in die Zentrieröffnung 14 eingesetzt und trägt die Spannhülse 3 noch kein Werkzeug, wird eine Beschädigung der Spannhülse 3 durch versehentliches Spannen des Spannfutters 1 durch die Ringschulter 24 vermieden. An dieser findet die dem Fortsatz 42 benachbarte Stirnfläche der Spannhülse 3 Anlage, bevor die Spannhülse 3 so weit in die Zentrieröffnung 14 hineingezogen ist, dass die Spannhülse irreversibel geschädigt wäre.

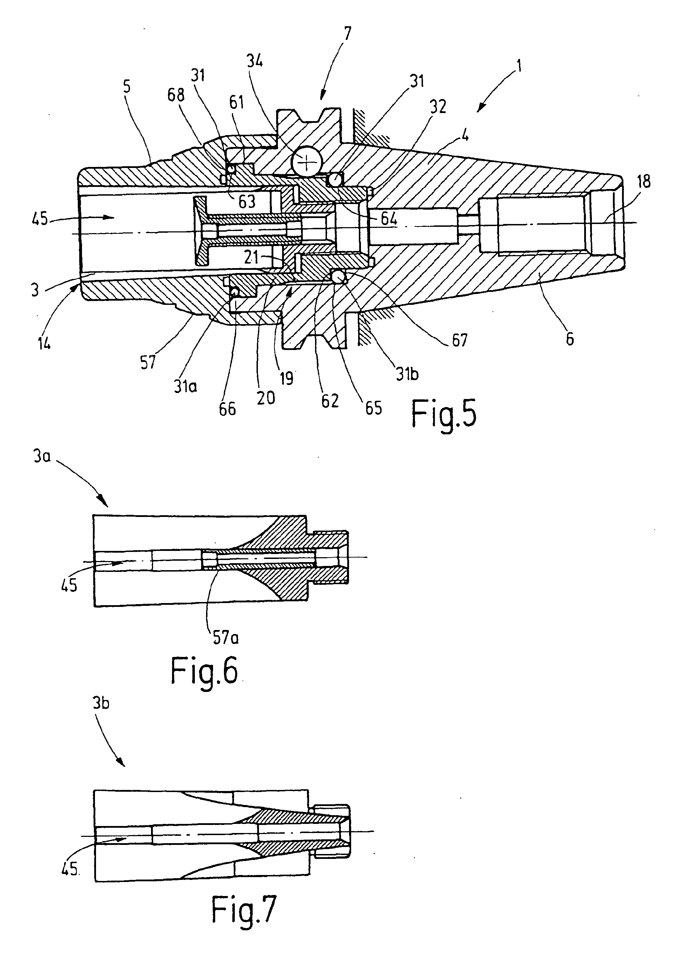

Eine abgewandelte Ausführungsform des Spannfutters 1 ist aus Figur 5 ersichtlich. Bis auf die nachfolgenden Details liegt Übereinstimmung mit dem vorstehend beschriebenen Spannfutter 1 (Figuren 1 - 4) vor. Auf diese Beschreibung wird entsprechend verwiesen. Im Unterschied zu dem vorstehend beschriebenen Spannfutter 1 ist bei dem Spannfutter 1 nach Figur 5 eine kürze Bauform gewählt. Dazu ist die Schnecke 34, die bei dem Spannfutter 1 nach Figur 1 vor dem Greifflansch 7 angeordnet ist, im Bereich des Greifflanschs 7 angeordnet. Dies bewirkt eine noch kompaktere Bauform.

Das vordere und hintere Drucklager 31a, 31b kann, wie aus Figur 5 hervorgeht, nicht nur zur axialen Lagerung des Drehkörpers 20, sondern gleichzeitig zur radialen Lagerung desselben dienen, wenn den Kugeln 31 nicht nur axial orientierte Flächen, sondern außerdem Zylinderflächen zugeordnet sind, die an dem Gehäuseteil 4 bzw. dem Drehkörper 20 ausgebildet sind. Dazu weist der Drehkörper 20 die in Figur 5 veranschaulichten Ringflächen 61, 62 und die Zylinderflächen 63, 64 auf. An dem Gehäuseteil 4 sind die Zylinderflächen 65, 66 sowie die Ringfläche 67 vorgesehen. Der vordere Gehäuseteil 5 weist die zur Lagerung dienende Ringfläche 68 auf. Damit bilden die Ringflächen 61, 68 mit den Kugeln 31 das erste axiale Drucklager 31a und die Ringflächen 62, 67 bilden mit den Kugeln 31, das zweite axiale Drucklager 31b. Die Zylinderflächen 64, 65 bilden mit den Kugeln 31 das zweite Radiallager. Die Zylinderflächen 63, 66 bilden mit den Kugeln 31 das erste Radiallager.

Die Figuren 6 und 7 veranschaulichen noch Spannhülsen 3a, 3b mit geringeren Innendurchmessern. Entsprechend dem geringen Durchmesser ihrer Schaftaufnahmeöffnung 45 ist auch ein entsprechend schlanker Justierbolzen, 57a eingesetzt (Fig. 6). Dieser kann auch weggelassen werden, wie Figur 7 veranschaulicht.

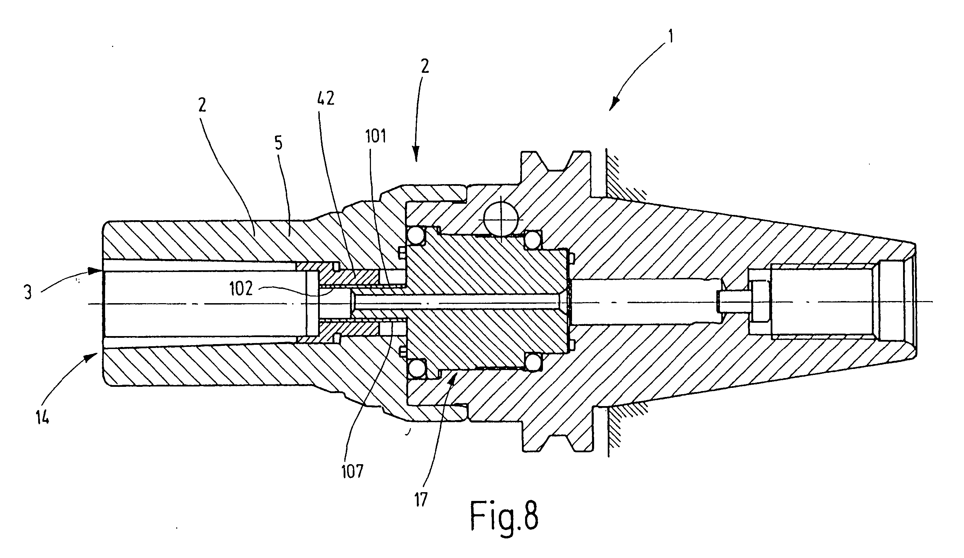

In Figur 8 ist eine alternative Ausführungsform der Spannhülsen-Spanneinrichtung 1 veranschaulicht. Soweit Bau-und Funktionsgleichheit mit vorstehend beschriebenen Ausführungsformen besteht, wird unter Zugrundelegung gleicher beibehaltener Bezugszeichen auf die vorstehende Beschreibung verwiesen. Im Unterschied zu der vorstehend beschriebenen Ausführungsform weist die Spannhülsen-Spanneinrichtung 1 nach Figur 8 an ihrer der Spannhülse 3 zugewandten Seite einen Fortsatz 101 auf, der mit Außengewinde versehen ist. Das Spanngewinde ist ein Innengewinde 102, das in einer Bohrung des Fortsatzes 42 vorgesehen ist. Dieser sitzt mit Radialspiel in dem Teil 5 des Gehäusekörpers 2 und ist somit seitlich frei. Die Zentrierung erfolgt allein durch die Zentrieröffnung 14. Vorteilhaft bei dieser Ausführungsform ist die geringe Gewindereibung aufgrund des geringen Gewindedurchmessers. Die Spanngewindeverbindung, die durch Eingriff des Innengewindes 102 mit dem Außengewinde 107 gebildet ist, ist vor der Aufnahmekammer 17 angeordnet. Dies ermöglicht eine schlanke Bauform des Spannfutters 1.

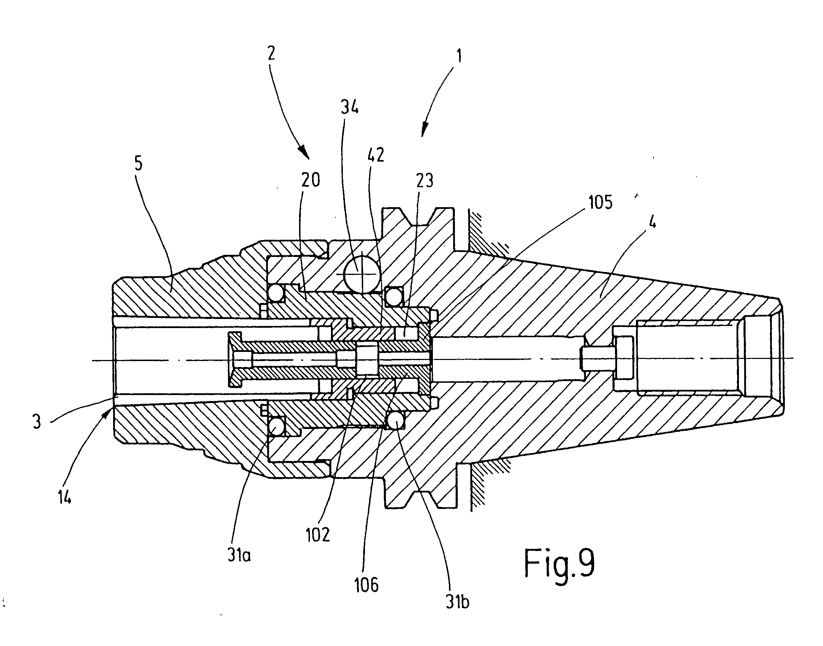

Alternativ kann eine Kurzbauform nach Figur 9 gewählt werden. Dieses Spannfutter 1 weist einen Drehkörper 20 auf, in dessen Zentralöffnung 23 ein mit Außengewinde versehener Bolzen 105 sitzt. Dieser ist drehfest mit dem übrigen Drehkoper 20 verbunden und weist einen in Richtung auf die Spannhülse 3 vorstehenden Außengewinde tragenden Fortsatz 106 auf, der mit dem Innengewinde 102 der Spannhülse 3 in Eingriff steht. Der Fortsatz 42 der Spannhülse ist in Radialrichtung nicht von dem Drehkörper 20 geführt. Vielmehr erfolgt die Führung der Spannhülse 3 allein in dem Teil 5 des Gehäusekörpers 2, d.h. in der Zentrieröffnung 14. Somit werden Kippmomente, Radialbewegungen und Kippbewegungen des Drehkörpers 20 nicht auf die Spannhülse 3 übertragen. Der Bolzen 105 kann mit dem Drehkörper 20 verschweißt, verklebt oder anderweitig in Axialrichtung und in Drehrichtung fest verbunden sein.

Der Vorteil dieser Bauform liegt, wie bei der Bauform nach Figur 1, in der Anordnung der Spanngewindeverbindung zwischen den Lagern 31a, 31b, was dazu führt, dass Seitenbewegungen, Radialbewegungen, Kippbewegungen des Drehkörpers und dergleichen nicht wesentlich auf das Spannelement 3 übertragen werden. Dies insbesondere auch deshalb, weil der Drehkörper 20 im Wesentlichen nur über die Spanngewindeverbindung mit dem Spannelement 3 in Verbindung steht, d.h. der Drehkörper 20 und die Spannhülse 3 berühren sich anderweitig nicht. Dadurch übernimmt der Drehkörper 20 keinerlei Führung für die Spannhülse 3. Dies gilt auch für alle anderen Ausführungsformen.

Eine Spannhülsen-Spanneinrichtung 1 weist eine Spannhülse 3 auf, die in einer kegelförmigen Zentrieröffnung 14 eines Gehäusekörpers 2 gelagert ist. Zum Festziehen und zum Lösen der Spannhülse 3 dient ein Spanngetriebe 19, zu dem ein Drehkörper 20 gehört. Dieser weist eine Zentralöffnung 23 auf, die mit einem Innengewinde oder Außengewinde versehen ist, und das mit der Spannhülse 3 in direktem Eingriff steht. Der Drehkörper 20 stützt sich vorzugsweise über einen Wälzlager an einer entsprechenden Lagerfläche des Gehäusekörpers 2 ab. Der Drehkörper 20 ist über ein untersetzendes Getriebe angetrieben, beispielsweise über eine Schnecke 34. Dadurch können in Verbindung mit dem relativ geringen Durchmesser des Spanngewindes 25 und dem kleinen Kegelwinkel hohe Spannkräfte erzeugt werden. Der geringe Durchmesser des Spanngewindes 25 sichert eine geringe Gewindereibung.

## Patentansprüche

1. Spannfutter (1),
mit einem Spannelement (3), das an einem Schaft ausgebildet oder mit diesem verbindbar ist und eine konische Außenseite (16) aufweist und das mit einem Spanngewinde (43) versehen ist,
mit einem Gehäusekörper (2), der eine sich kegelförmig verjüngende Zentrieröffnung (14), die zur Aufnahme des Spannelements (3) eingerichtet ist, und eine Aufnahmekammer (17) für ein Spanngetriebe (17a) aufweist, wobei die Zentrieröffnung (14) in die Aufnahmekammer (17) führt,
wobei zu dem Spanngetriebe (17a) ein Drehkörper (20) gehört, der in der Aufnahmekammer (17) koaxial zu der Zentrieröffnung (14) angeordnet und drehbar sowie axial im Wesentlichen unverschiebbar gelagert ist und der ein Gewinde aufweist, das unmittelbar mit dem Spanngewinde (43) in Eingriff steht, und der über ein Winkelgetriebe (20a, 34) mit einer Betätigungseinrichtung (38) verbunden ist
wobei der Drehkörper (20) über ein erstes axiales Drucklager (31a) in Spannrichtung an dem Gehäusekörper (2) abgestützt ist und
wobei der Drehkörper (20) über ein zweites axiales Drucklager (31b) in Löserichtung an dem Gehäusekörper (2) abgestützt ist,
**dadurch gekennzeichnet,**
**dass** die Außenseite (16) einen Kegelwinkel von kleiner als 3,5° festlegt,
**dass** das erste axiale Drucklager (31a) ein Wälzlager ist,
**dass** das zweite axiale Drucklager (31b) ein Wälzlager ist.

2. Spannfutter nach Anspruch 1, **dadurch gekennzeichnet, dass** das Spannelement (3) an dem Gehäusekörper (2) ausschließlich durch die Anlage der konischen Außenseite (16) an der Wandung der zentralen Zentrieröffnung (14) zentriert ist.

3. Spannfutter nach Anspruch 1, **dadurch gekennzeichnet, dass** der Drehkörper (20) eine zentrale Aufnahme (23) aufweist, in der das Spannelement (3) sitzt.

4. Spannfutter nach Anspruch 1, **dadurch gekennzeichnet, dass** der Drehkörper (20) ein Außengewinde aufweist und das Spannelement (3) als Spanngewinde (43) ein Innengewinde aufweist.

5. Spannfutter nach Anspruch 1, **dadurch gekennzeichnet, dass** das Winkelgetriebe (17a) in einer Ebene angeordnet ist, in der auch das Spanngewinde (43) angeordnet ist.

6. Spannfutter nach Anspruch 1 und 4, **dadurch gekennzeichnet, dass** das Spanngewinde (43) außerhalb einer Radialebene angeordnet ist, in der das Winkelgetriebe angeordnet ist.

7. Spannfutter nach Anspruch 1, **dadurch gekennzeichnet, dass** das Winkelgetriebe (17a) seitlich neben dem Spannelement (3) angeordnet ist.

8. Spannfutter nach Anspruch 1, **dadurch gekennzeichnet, dass** der Drehkörper (20) an seiner Außenumfangsfläche Elemente (21) zur antriebsmäßigen Verbindung mit der Drehantriebseinrichtung (34) aufweist, die durch Zähne einer Verzahnung gebildet sind, die mit einer Schnecke (34) im Eingriff stehen.

9. Spannfutter nach Anspruch 7, **dadurch gekennzeichnet, dass** der Drehkörper (20) an seiner Außenumfangsfläche Elemente (21) zur antriebsmäßigen Verbindung mit der Drehantriebseinrichtung (34) aufweist, die durch Zähne einer Verzahnung gebildet sind, wobei die Zähne mit einem Kegelrad in Eingriff stehen.

10. Spannfutter nach Anspruch 1, **dadurch gekennzeichnet, dass** die Betätigungseinrichtung eine Handhabe oder ein Kupplungsmittel (38) zur Verbindung mit einer solchen ist, die seitlich neben dem Gehäusekörper (2) anzuordnen ist.

11. Spannfutter nach Anspruch 1, **dadurch gekennzeichnet, dass** der Drehkörper (20) zu beiden Seiten des Winkelgetriebes (22a, 34) durch Radiallager an dem Gehäusekörper (2) gelagert ist.

12. Spannfutter nach Anspruch 1, **dadurch gekennzeichnet, dass** das Spanngewinde (43) einen Durchmesser aufweist, der geringer ist als jeder andere Außendurchmesser des Spannelements (3) und dass das Spannelement (3) aus dem Drehkörper (20) herausschraubbar ist.

13. Spannfutter nach Anspruch 1, **dadurch gekennzeichnet, dass** die Spanngewindeverbindung und das Axialspiel des Drehkörpers (20) ein Drehkörper-Drehspiel zwischen einer Spannposition, in der der Drehkörper (20) das Spannelement (3) in die die Öffnung (14) zieht, und einer Löseposition festlegen, in der der Drehkörper (20) das Spannelement (3) aus seiner Spannposition heraus drückt.

14. Spannfutter nach Anspruch 1, **dadurch gekennzeichnet; dass** die Spanngewindeverbindung ein Radialspiel aufweist, das größer ist als jede durch das Winkelgetriebe verursachte Radialbewegung des Drehkörpers (20)

15. Spannfutter nach Anspruch 1, **dadurch gekennzeichnet, dass** die Spannhülse (3) und/oder die Wandung der Öffnung (14) mit einer reibungsmindernden Beschichtung versehen ist.

16. Spannfutter nach Anspruch 15, **dadurch gekennzeichnet, dass** der Reibbeiwert der Beschichtung gegen die Wandung der Öffnung (14) 0,05 bis 0,15 beträgt.

17. Spannfutter nach Anspruch 15, **dadurch gekennzeichnet, dass** die Beschichtung eine schlagzähe Hartstoffbeschichtung ist.

18. Spannfutter nach Anspruch 15, **dadurch gekennzeichnet, dass** die Beschichtung eine glatte diamantähnliche Kohlenstoffbeschichtung oder eine andere, bei niedrigen Temperaturen (< 200°C) zu erzeugende Beschichtung ist.

19. Spannfutter nach Anspruch 15, **dadurch gekennzeichnet, dass** die Beschichtung eine Wolframcarbidbeschichtung mit Kohlenstoffbeschichtung oder eine andere bei niedrigen Temperaturen (< 300°C) zu erzeugende Beschichtung ist.

20. Spannfutter nach Anspruch 1, **dadurch gekennzeichnet, dass** dem Drucklager (31a, 31b) jeweils wenigstens eine Dichtungseinrichtung (32, 33) benachbart ist.

21. Spannfutter nach Anspruch 1, **dadurch gekennzeichnet, dass** der Drehkörper (20) in seiner Zentralöffnung (23) eine Ringschulter (24) aufweist, der eine Stirnfläche des Spannelements (3) zugeordnet ist und die eine Spannweg-Begrenzungseinrichtung bilden.

22. Spannfutter nach Anspruch 1, **dadurch gekennzeichnet, dass** das Spannelement (3) im Anschluss an die Schaftöffnung (45) eine Durchgangsöffnung (56) aufweist, die mit Innengewinde versehen ist.

23. Spannfutter nach Anspruch 22, **dadurch gekennzeichnet, dass** in die Durchgangsöffnung (56) ein mit Außengewinde versehener Justierbolzen (57) eingesetzt ist.

24. Spannfutter nach Anspruch 23, **dadurch gekennzeichnet, dass** der Gehäusekörper (2) eine sich an die Aufnahmekammer (17) anschließende Durchgangsbohrung (19) aufweist, durch die der Justierbolzen (57) zugänglich ist.

25. Spannfutter nach Anspruch 1, **dadurch gekennzeichnet, dass** der Gehäusekörper (2) zur Verbindung mit einer Arbeitsspindel einer Werkzeugmaschine eingerichtet ist sowie zur Verbindung mit WZ-Revolvern oder ähnliche WZ-Aufnahmen.

26. Spannfutter nach Anspruch 1, **dadurch gekennzeichnet, dass** der Gehäusekörper (2) zweiteilig aus einem ersten Gehäuseteil (4) und einem zweiten Gehäuseteil (5) aufgebaut ist, die miteinander an der Aufnahmekammer (17) verbunden sind.

27. Spannfutter nach Anspruch 26, **dadurch gekennzeichnet, dass** die Gehäuseteile (4, 5) miteinander unlösbar verbunden sind.

28. Spannfutter nach Anspruch 1, **dadurch gekennzeichnet, dass** der Werkzeugkörper (2) an seiner Stirnseite eine die Zentrieröffnung (14) umgebende Planfläche zur Abstützung von Werkzeugen oder deren Teilen aufweist.

## Claims

1. Chuck (1),
with a clamping element (3), which is configured on a shaft or can be connected to this and has a conical outer surface (16) and which is provided with a clamping thread (43),
with a housing body (2), which has a conically tapering centring opening (14), which is configured to receive the clamping element (3), and a receiving chamber (17) for a chucking mechanism (17a), wherein the centring opening (14) leads into the receiving chamber (17),
wherein the chucking mechanism (17a) includes a rotary body (20), which is arranged in the receiving chamber (17) coaxially to the centring opening (14) and is mounted to be rotatable as well as substantially axially non-displaceable, and which has a thread that engages directly with the clamping thread (43) and which is connected via an angular gear (20a, 34) to an actuating means (38),
wherein the rotary body (20) is supported on the housing body (2) via a first axial thrust bearing (31a) in the clamping direction, and
wherein the rotary body (20) is supported on the housing body (2) via a second axial thrust bearing (31b) in the release direction,
**characterised in that**
the outer surface (16) defines a cone angle of less than 3.5°,
that the first axial thrust bearing (31a) is a rolling bearing
that the second axial thrust bearing (31b) is a rolling bearing.

2. Chuck according to Claim 1, **characterised in that** the clamping element (3) is centred on the housing body (2) solely by the conical outer surface (16) abutting against the central centring opening (14).

3. Chuck according to Claim 1, **characterised in that** the rotary body (20) has a central seating (23), in which the clamping element (3) sits.

4. Chuck according to Claim 1, **characterised in that** the rotary body (20) has an external thread and the clamping element (3) has an internal thread as clamping thread (43).

5. Chuck according to Claim 1, **characterised in that** the angular gear (17a) is arranged in a plane, in which the clamping thread (43) is also arranged.

6. Chuck according to Claim 1 and 4, **characterised in that** the clamping thread (43) is arranged outside a radial plane, in which the angular gear is arranged.

7. Chuck according to Claim 1, **characterised in that** the angular gear (17a) is arranged laterally next to the clamping element (3).

8. Chuck according to Claim 1, **characterised in that** on its outer peripheral face the rotary body (20) has elements (21) for drive connection to the rotary drive means (34), which are formed by teeth of a gearing arrangement, which meshes with a worm (34).

9. Chuck according to Claim 7, **characterised in that** on its outer peripheral face the rotary body (20) has elements (21) for drive connection to the rotary drive means (34), which are formed by teeth of a gearing arrangement, wherein the teeth mesh with a bevel gear.

10. Chuck according to Claim 1, **characterised in that** the actuating means is a handle or a coupling means (38) for connection to such, which is to be arranged laterally next to the housing body (2).

11. Chuck according to Claim 1, **characterised in that** the rotary body (20) is mounted on the housing body (2) on both sides of the angular gear (22a, 34) by means of radial bearings.

12. Chuck according to Claim 1, **characterised in that** the clamping thread (43) has a diameter, which is smaller than every other outside diameter of the clamping element (3), and that the clamping element (3) can be screwed out of the rotary body (20).

13. Chuck according to Claim 1, **characterised in that** the clamping thread connection and the axial play of the rotary body (20) define a rotary body-rotational play between a clamping position, in which the rotary body (20) pulls the clamping element (3) into the opening (14), and a release position, in which the rotary body (20) presses the clamping element (3) out of its clamping position.

14. Chuck according to Claim 1, **characterised in that** the clamping thread connection has a radial play, which is larger than every radial movement of the rotary body (20) caused by the angular gear.

15. Chuck according to Claim 1, **characterised in that** the clamping sleeve (3) and/or the wall of the opening (14) is provided with an anti-friction coating.

16. Chuck according to Claim 15, **characterised in that** the coefficient of friction of the coating relative to the wall of the opening (14) amounts to 0.05 to 0.15.

17. Chuck according to Claim 15, **characterised in that** the coating is an impact-resistant hard material coating.

18. Chuck according to Claim 15, **characterised in that** the coating is a smooth diamond-like carbon coating or another coating to be generated at low temperatures (< 200°C).

19. Chuck according to Claim 15, **characterised in that** the coating is a tungsten carbide coating with a carbon coating or another coating to be generated at low temperatures (< 300°C).

20. Chuck according to Claim 1, **characterised in that** at least one sealing means (32, 33) is respectively arranged adjacent to the thrust bearing (31a, 31b).

21. Chuck according to Claim 1, **characterised in that** in its central opening (23) the rotary body (20) has an annular shoulder (24), which has an associated face of the clamping element, and which form a clamping path restriction means.

22. Chuck according to Claim 1, **characterised in that** adjoining the shaft opening (45), the clamping element (3) has a passage (56), which is provided with an internal thread.

23. Chuck according to Claim 22, **characterised in that** an adjusting pin (57) provided with an external thread is inserted into the passage (56).

24. Chuck according to Claim 23, **characterised in that** the housing body (2) has a through-hole (19), which adjoins the receiving chamber (17) and through which the adjusting pin (57) is accessible.

25. Chuck according to Claim 1, **characterised in that** the housing body (2) is configured for connection to a work spindle of a machine tool and also for connection to tool turrets or similar tool holding fixtures.

26. Chuck according to Claim 1, **characterised in that** the housing body (2) is configured in two parts from a first housing part (4) and second housing part (5), which are connected to one another at the receiving chamber (17).

27. Chuck according to Claim 26, **characterised in that** the housing parts (4, 5) are non-detachably connected to one another.

28. Chuck according to Claim 1, **characterised in that** on its front side the tool body (2) has a face surrounding the centring opening (14) to support tools or their parts.

## Revendications

1. Mandrin de serrage (1) dans lequel
- un élément de serrage (3) qui est réalisé sur une tige ou peut être reliée à celle-ci, présente une portée externe (15) conique (16) et porte un filetage de serrage (43),
- un corps de boîtier (2) présente une ouverture de centrage (14) qui va en se réduisant en forme de cône et est aménagée pour accueillir l'élément de serrage (3), ainsi qu'une chambre d'accueil (17) pour un engrenage de serrage (17a), l'ouverture de centrage (14) conduisant à la chambre d'accueil (17),
- à l'engrenage de serrage (17a) appartient un corps tournant (20) qui est monté dans la chambre d'accueil (17) coaxialement à l'ouverture de centrage (14) en pouvant tourner mais sans pouvoir coulisser axialement, et porte un filetage qui est directement en prise avec le filetage de serrage (43), le corps tournant (20) étant relié par u n engrenage angulaire (20a, 34) à un dispositif d'actionnement (38),
- le corps tournant (20) est en appui sur le corps de boîtier (2), dans le sens de serrage, par un premier palier axial de pression (31a),
- le corps tournant (20) est en appui sur le corps de boîtier (2), dans le sens de dégagement, par un second palier axial de pression (31b),
ce mandrin de serrage étant **caractérisé en ce que**
- la portée externe (16) présente un angle de cône inférieur à 3,5°,
- le premier palier axial de pression (31a) est un palier de roulement,
- le second palier axial de pression (31b) est un palier de roulement.

2. Mandrin de serrage selon la revendication 1, **caractérisé en ce que** l'élément de serrage (3) est centré sur le corps de boîtier (2) exclusivement par l'appui de la portée conique externe (16) sur la paroi de l'ouverture centrale de centrage (14).

3. Mandrin de serrage selon la revendication 1, **caractérisé en ce que** le corps tournant (20) présente un évidement central (23) dans lequel est monté l'élément de serrage.

4. Mandrin de serrage selon la revendication 1, **caractérisé en ce que** le corps tournant (20) porte un filetage externe et l'élément de serrage (3) porte en tant que filetage de serrage (43), un filetage interne.

5. Mandrin de serrage selon la revendication 1, **caractérisé en ce que** l'engrenage angulaire (17a) est disposé dans un plan où se trouve également le filetage de serrage (43).

6. Mandrin de serrage selon la revendication 1, **caractérisé en ce que** le filetage de serrage (43) est disposé en dehors d'un plan radial où se trouve l'engrenage angulaire.

7. Mandrin de serrage selon la revendication 1, **caractérisé en ce que** l'engrenage angulaire (17a) est disposé latéralement, à côté de l'élément de serrage (3).

8. Mandrin de serrage selon la revendication 1, **caractérisé en ce que** le corps tournant (20) présente à sa périphérie externe des éléments (2) pour assurer une liaison d'entraînement avec le dispositif d'entraînement en rotation (34), constitué par des dents qui sont en prise avec une vis tangente (34).

9. Mandrin de serrage selon la revendication 1, **caractérisé en ce que** le corps tournant (20) présente à sa périphérie externe des éléments (2) pour assurer une liaison d'entraînement avec le dispositif d'entraînement en rotation (34), constitué par une denture dont les dents sont en prise avec un pignon conique.

10. Mandrin de serrage selon la revendication 1, **caractérisé en ce que** le dispositif d'actionnement est une manette ou un moyen d'accouplement (38) pour liaison avec une telle manette, qui doit être disposée latéralement près du corps de boîtier (2).

11. Mandrin de serrage selon la revendication 1, **caractérisé en ce que** le corps tournant (20) est, de part et d'autre de l'engrenage angulaire (22a, 34), monté sur le corps de boîtier (2) par des paliers radiaux.

12. Mandrin de serrage selon la revendication 1, **caractérisé en ce que** le filetage de serrage (43) a un diamètre inférieur au diamètre de l'élément de serrage (3), et cet élément de serrage (3) peut être sorti du corps tournant (20) par vissage.

13. Mandrin de serrage selon la revendication 1, **caractérisé en ce que** la liaison filetée de serrage et le jeu axial du corps tournant (20) déterminent un jeu de rotation du corps tournant entre une position de serrage dans laquelle le corps tournant (20) tire l'élément de serrage (3) dans l'ouverture (14), et une position de dégagement dans laquelle le corps tournant (20) écarte par poussée l'élément de serrage (3) de sa position de serrage.

14. Mandrin de serrage selon la revendication 1, **caractérisé en ce que** la liaison filetée de serrage présente un jeu radial qui est supérieur à tout déplacement radial du corps tournant (20), dû à l'engrenage angulaire.

15. Mandrin de serrage selon la revendication 1, **caractérisé en ce que** la douille de serrage (3) et/ou la paroi de l'ouverture (14) est garnie d'un revêtement réduisant la friction.

16. Mandrin de serrage selon la revendication 1, **caractérisé en ce que** le coefficient de friction du revêtement par rapport à la paroi de l'ouverture (13) va de 0,05 à 0,15.

17. Mandrin de serrage selon la revendication 1, **caractérisé en ce que** le revêtement est en matériau dur résilient aux chocs.

18. Mandrin de serrage selon la revendication 1, **caractérisé en ce que** le revêtement est un revêtement carboné lisse du genre diamant ou un autre revêtement à déposer à des températeurs basses (< 200°).

19. Mandrin de serrage selon la revendication 1, **caractérisé en ce que** le revêtement est en carbure de tungstène avec couche de carbone, ou un autre revêtement à déposer à des températures basses (< 300°).

20. Mandrin de serrage selon la revendication 1, **caractérisé en ce qu'**au moins un dispositif d'étanchéité (32, 33) est proche de chaque palier de pression (31a, 31b).

21. Mandrin de serrage selon la revendication 1, **caractérisé en ce que** le corps tournant (20) présente dans son ouverture centrale (23) un épaulement annulaire (24) auquel est associée une face frontale de l'élément de serrage (3) en formant un dispositif de limitation de la course de serrage.

22. Mandrin de serrage selon la revendication 1, **caractérisé en ce que** l'élément de serrage (3) présente à son raccordement à l'ouverture de tige (45) une ouverture de passage (56) portant un évidement interne.

23. Mandrin de serrage selon la revendication 1, **caractérisé en ce que** dans l'ouverture de passage (56) est logée une vis d'ajustage (57) portant un filetage interne.

24. Mandrin de serrage selon la revendication 1, **caractérisé en ce que** le corps de boîtier (2) présente un alésage de passage (19) se raccordant à la chambre d'accueil (17) et à travers lequel on peut accéder à la vis d'ajustage (57).

25. Mandrin de serrage selon la revendication 1, **caractérisé en ce que** le corps de boîtier (2) est conçu pour être relié à la broche de travail d'une machine-outil et également pour être relié à des tourelles d'outils ou à des logements d'outils analogues.

26. Mandrin de serrage selon la revendication 1, **caractérisé en ce que** le corps de boîtier (2) est en deux parties, à savoir une première partie de boîtier (4) et une seconde partie du boîtier (5) qui sont reliées ensemble à la chambre d'accueil (17).

27. Mandrin de serrage selon la revendication 26, **caractérisé en ce que** les deux parties de boîtier (4, 5) sont reliées entre elles de manière inséparable.

28. Mandrin de serrage selon la revendication 1, **caractérisé en ce que** le corps d'outil (2) présente sur sa face frontale une surface plane entourant l'ouverture de centrage (14) et destinée à soutenir des outils ou des parties d'outils.
